# EUROPEAN PATENT SPECIFICATION

(11) **EP 4 726 330 B1**
(45) Date of publication and mention of the grant of the patent: **25.11.2026**
(21) Application number: 24206157.0
(22) Date of filing: 11.10.2024
(51) Int. Cl.: G01C 21/20, G08G 3/00, B63C 9/00, G06V 20/52, B63B 49/00

(54) **MANAGING A MAN-OVERBOARD SITUATION FOR A MARINE VESSEL**
VERWALTUNG EINER MAN-OVERBOARD-SITUATION FÜR EIN WASSERFAHRZEUG
GESTION D'UNE SITUATION DE MAN-OVERBOARD POUR UN NAVIRE

(43) Date of publication of application: 15.04.2026
(73) Proprietor: CPAC Systems AB, 412 64 Göteborg (SE)
(72) Inventor: Bergenwall, Jonatan, 43351 ÖJERSJÖ (SE); Lund, Erik, 43131 MÖLNDAL (SE); Måneskiöld, Axel, 411 25 GÖTEBORG (SE); Strömberg, Valter, 41264 GÖTEBORG (SE)
(74) Representative: Ström & Gulliksson AB

(56) References cited:
- US-A1- 2020 012 283
- US-A1- 2022 058 957
- US-B2- 8 810 436

## Description

### TECHNICAL FIELD

The disclosure relates generally to safety at sea. In particular aspects, the disclosure relates to managing a man-overboard, MOB, situation for a marine vessel. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel.

### BACKGROUND

The management of a MOB situation is a critical aspect of marine safety, and may involve identification, location tracking, and rescue operations. MOB incidents can occur due to various factors including rough sea conditions, human error, or sudden medical emergencies. The timely and accurate response to such events is paramount in maximizing the chances of a successful rescue and ensuring the safety of individuals at sea.

The present inventors have identified a lack of efficient MOB management in the prior art, and are therefore suggesting improved approaches in this regard.

US2020012283 Al discloses a piloted and/or non-piloted marine vessel facilitating and supporting autonomous onboard capabilities for safety (i.e. collision avoidance, man-overboard, etc.) and security (i.e. intrusion, illegal boarding, etc.).

### SUMMARY

When a person falls overboard on a vessel, it is difficult to find that person, especially if the weather is bad and/or it is dark outside. Existing MOB management systems in the prior art often fall short in several areas, as they may rely on manual observation and basic onboard equipment, such as life rings with attached locator beacons. While these methods can provide initial alerts, they are often plagued by limitations that hinder effective rescue operations.

One drawback of prior art solutions is the lack of precise, real-time tracking of the MOB. Many existing systems are unable to continuously monitor and update the position of the MOB, leading to potential delays and inaccuracies in locating the individual. This lack of precision can be detrimental in dynamic marine environments where quick and accurate responses are important.

Another issue with existing MOB management systems is the propensity for false positives, which can confuse and overwhelm operators. False alarms can be triggered by various factors, such as debris or marine wildlife, leading to unnecessary diversions and wasted resources. This problem is exacerbated in modern electronic vessel systems that feature numerous electronic components, each demanding a portion of the operator's attention. Such false positives may not only complicate the rescue process but may also diminish the overall reliability and trust in the MOB system.

Furthermore, existing solutions are often not designed to adapt to evolving circumstances during a MOB incident. For example, they may not account for drift patterns caused by wind and currents, which typically alter the position of the MOB over time. The inability to dynamically adjust and update the MOB's location can compromise the effectiveness of the rescue mission.

In summary, there is a need for advancements in MOB management systems that address the shortcomings of the prior art mentioned above and others.

In a first aspect of the disclosure there is provided a computer system for managing a man-overboard, MOB, situation for a marine vessel, the computer system comprising processing circuitry configured to receive an operator request for activation of a MOB mode for the marine vessel; in response to receiving the operator request, activate the MOB mode by controlling activation of one or more sensors configured to monitor surroundings of the marine vessel; obtain sensing data from said one or more sensors identifying at least one detectable feature of a MOB in said surroundings of the marine vessel; generate a MOB map based on the sensing data, the MOB map displaying one or more graphical indications of a position of the MOB in relation to a position of the marine vessel; estimate said position of the MOB at least based on a latest known position of said at least one detectable feature and a current position of the marine vessel; and update the MOB map based on the estimation of the position of the MOB.

The first aspect of the disclosure may seek to address the difficulty in rapidly and accurately locating a person who has fallen overboard. A technical benefit may include providing precise, real-time tracking and mapping of the MOB's position, enhancing the efficiency and effectiveness of rescue operations.

Optionally in some examples, including in at least one preferred example, the processing circuitry is further configured to: identify one or more searchable areas in the MOB map; mark a searchable area as visited in response to the marine vessel having visited said searchable area based on its current position; and update the MOB map based on the marked searchable area. A technical benefit may include enhancing search efficiency by clearly identifying and marking searchable areas on the MOB map, allowing the crew to systematically cover potential locations of the MOB.

Optionally in some examples, including in at least one preferred example, the processing circuitry is further configured to: generate a search path for the marine vessel based on the one or more searchable areas and the position of the MOB in relation to the position of the marine vessel; and provide one or more navigational instructions based on the search path. A technical benefit may include optimizing navigation by generating a targeted search path and providing precise navigational instructions, ensuring thorough and efficient coverage of relevant areas.

Optionally in some examples, including in at least one preferred example, the processing circuitry is configured to automatically perform the estimation of the position of the MOB in response to a failure to obtain sensing data from the one or more sensors. A technical benefit may include maintaining continuous MOB tracking by automatically estimating its position even when sensor data is unavailable, ensuring uninterrupted rescue operations and potentially saving lives.

Optionally in some examples, including in at least one preferred example, the processing circuitry is further configured to: obtain environmental data of the surroundings of the marine vessel; and estimate said position of the MOB based on said environmental data. A technical benefit may include improving accuracy in MOB location estimation by integrating environmental data, which provides additional context for the MOB's movement.

Optionally in some examples, including in at least one preferred example, the obtained environmental data comprises one or more of wind speed, wind direction and current flow, and wherein the processing circuitry is configured to: calculate a drift vector for the MOB based on said one or more of wind speed, wind direction and current flow; and estimate the position of the MOB based on the drift vector. A technical benefit may include refining MOB position estimates by calculating a drift vector based on environmental factors such as wind and currents, enhancing predictive tracking capabilities.

Optionally in some examples, including in at least one preferred example, the estimation of the position of the MOB is continuous, and wherein the processing circuitry is configured to update the estimated position of the MOB at continuous intervals based on the movement of the marine vessel and the calculated drift vector. A technical benefit may include ensuring real-time adaptability by continuously updating the MOB's estimated position based on both vessel movement and environmental influences, maintaining accurate tracking.

Optionally in some examples, including in at least one preferred example, said at least one detectable feature is a reflective element and the sensing data is reflectivity data. A technical benefit may include increasing detection reliability by utilizing reflective elements as detectable features, thereby enhancing the system's ability to identify the MOB accurately.

Optionally in some examples, including in at least one preferred example, the reflective element comprises predetermined reflectivity properties, the processing circuitry being configured to map the obtained reflectivity data with said predetermined reflectivity properties to validate the identity of the MOB. A technical benefit may include validating MOB identity by mapping reflectivity data against predetermined properties, reducing false positives and ensuring precise identification.

Optionally in some examples, including in at least one preferred example, the processing circuitry is further configured to receive the operator request for activation of the MOB mode via an input device. A technical benefit of operator-initiated activation via an input device is the conservation of energy by activating sensors only when needed, thereby reducing false positives and ensuring critical systems remain operational for longer periods.

Optionally in some examples, including in at least one preferred example, the processing circuitry is further configured to display the MOB map at a display device of the marine vessel. A technical benefit may include enhancing situational awareness by displaying the updated MOB map on a vessel's display device, providing the crew with real-time visual information on the MOB's location.

In a second aspect of the disclosure there is provided a marine vessel comprising the computer system of the first aspect.

The second aspect of the disclosure may seek to address the difficulty in rapidly and accurately locating a person who has fallen overboard. A technical benefit may include providing precise, real-time tracking and mapping of the MOB's position, enhancing the efficiency and effectiveness of rescue operations.

In a third aspect of the disclosure there is provided a computer-implemented method for managing a man-overboard, MOB, situation for a marine vessel, comprising receiving, by processing circuitry of a computer system, an operator request for activation of a MOB mode for the marine vessel; in response to receiving the operator request, activating, by the processing circuitry, the MOB mode by controlling activation of one or more sensors configured to monitor surroundings of the marine vessel; obtaining, by the processing circuitry, sensing data from said one or more sensors identifying at least one detectable feature of a MOB in said surroundings of the marine vessel; generating, by the processing circuitry, a MOB map based on the sensing data, the MOB map displaying one or more graphical indications of a position of the MOB in relation to a position of the marine vessel; estimating, by the processing circuitry, said position of the MOB at least based on a latest known position of said at least one detectable feature and a current position of the marine vessel; and updating, by the processing circuitry, the MOB map based on the estimation of the position of the MOB.

The third aspect of the disclosure may seek to address the difficulty in rapidly and accurately locating a person who has fallen overboard. A technical benefit may include providing precise, real-time tracking and mapping of the MOB's position, enhancing the efficiency and effectiveness of rescue operations.

In a fourth aspect of the disclosure there is provided a computer program product comprising program code for performing, when executed by the processing circuitry, the method of the third aspect.

The fourth aspect of the disclosure may seek to enable new marine vessels and/or legacy marine vessels to be conveniently configured, by software installation/update, to address the difficulty in rapidly and accurately locating a person who has fallen overboard. A technical benefit may include providing precise, real-time tracking and mapping of the MOB's position, enhancing the efficiency and effectiveness of rescue operations.

In a fifth aspect of the disclosure there is provided non-transitory computer-readable storage medium comprising instructions, which when executed by the processing circuitry, cause the processing circuitry to perform the method of the third aspect.

The fifth aspect of the disclosure may seek to enable new marine vessels and/or legacy marine vessels to be conveniently configured, by software installation/update, to address the difficulty in rapidly and accurately locating a person who has fallen overboard. A technical benefit may include providing precise, real-time tracking and mapping of the MOB's position, enhancing the efficiency and effectiveness of rescue operations.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary marine vessel, according to an example.
**FIG. 2** is an exemplary schematic illustration of components involved in the management of a MOB situation, according to an example.
**FIG. 3A** is an exemplary schematic illustration of managing a MOB situation, showing a first part of a search procedure where a crew member falls overboard, according to an example.
**FIG. 3B** is a continuation of the exemplary schematic illustration of **FIG. 3A****,** showing a second part of the search procedure where a search has been initiated.
**FIG. 3C** is a continuation of the exemplary schematic illustration of **FIG. 3B****,** showing a third part of the search procedure where a search path is followed towards an estimated position of a MOB.
**FIG. 3D** is a continuation of the exemplary schematic illustration of **FIG. 3C****,** showing a fourth part of the search procedure where a search path is finished and a safety distance to the MOB is maintained.
**FIG. 4** is an exemplary flowchart illustration of a method for managing a MOB situation for a marine vessel, according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure addresses one or more of the deficiencies mentioned above by introducing approaches for managing a MOB situation for a marine vessel. The approaches involve receiving an operator request for activation of a MOB mode. Upon receiving this request, the activation of one or more sensors is controlled to monitor the surroundings of the marine vessel. Sensing data is obtained from these sensors to identify at least one detectable feature of the MOB, and a MOB map is generated which displays graphical indications of the MOB's position relative to the vessel's position. The position of the MOB is estimated based on the latest known position of the detectable feature and the current position of the marine vessel, updating the MOB map accordingly. This solution may ensure precise, real-time tracking, enhance situational awareness, reduce false positives, and adapt to changing environmental conditions, thereby improving the safety and efficiency of MOB rescue operations.

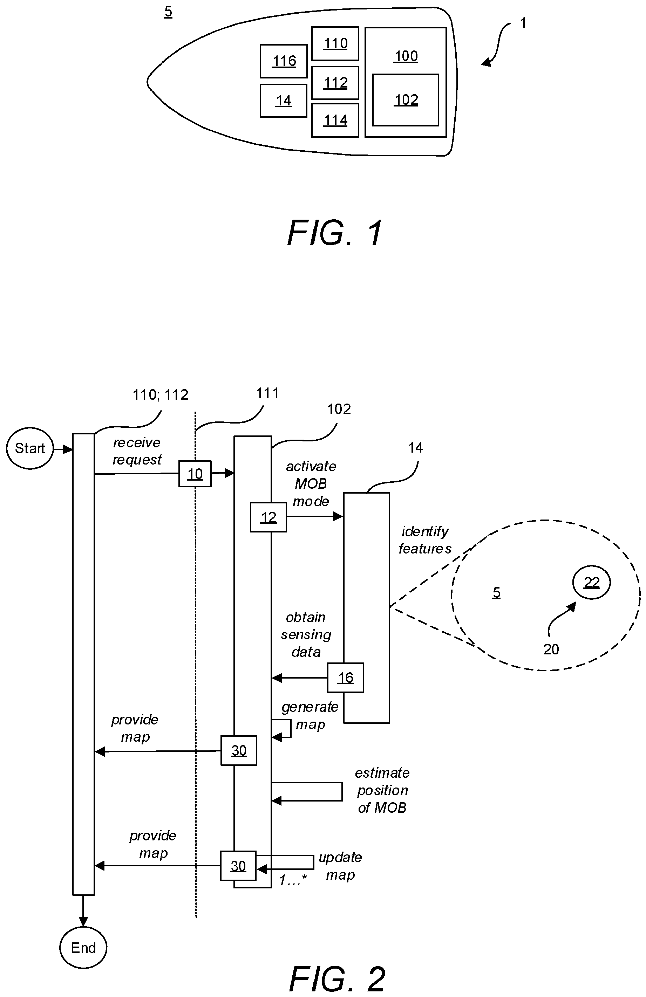

**FIG. 1** is an exemplary marine vessel **1** where aspects and examples described herein can be applied. In non-limiting examples, the marine vessel **1** is a leisure boat, ship, cruise ship, fishing vessel, yacht, ferry, or the like. The marine vessel **1** is adapted to operate in surroundings **5** at bodies of water, e.g., a sea, ocean, lake, river, bay, gulf, strait, channel, reservoir, fjord, marsh, swamp, etc. The surroundings **5** can include a variety of obstacles and environmental features. These surroundings **5** often involve other vessels, islands, marine wildlife, submerged objects, floating debris, and other common obstacles found in marine environments. The marine vessel **1** may be an electric marine vessel, gasoline-powered marine vessel, diesel-powered marine vessel, or the like.

The marine vessel **1** comprises a computer system **100** having processing circuitry **102.** The processing circuitry **102** is a central component responsible for executing various functions related to MOB management. It is designed to process input from one or more components, execute algorithms for real-time tracking and estimation, and generate visual representations.

The marine vessel **1** comprises an input device **110** having a user interface. This user interface can be designed to support multiple forms of input to cater to different operational environments and user preferences. Examples may include voice commands, touchscreens, or haptic feedback mechanisms. Variations may include combined input methods, such as voice and touch. The input device **110** may be integrated in a display device, such as being a touch panel at the display device **112.** The input device **110** may be a separate device, such as a physical MOB actuator (e.g. a button) actuatable by the operator. Such a physical actuator is preferably easily accessible by the operator so that the mode can be triggered as soon as possible. The input device **110** may yet alternatively be an input device of a portable device, such as a mobile phone or tablet, such that inputs can be sent remotely to the processing circuitry **102.** Inputs via the input device **110** may cause the triggering of an operator request for activation of a MOB mode **12.**

The marine vessel **1** comprises a display device **112** having a user interface. Typically, this interface is graphical, such as a digital display screen mounted on the vessel's **1** control panel. The display device **112** provides visual feedback in the form of graphical indications. The display device **112** may be complemented with audio alerts that inform the operator of events and/or actions required. Additionally, haptic feedback can be integrated with the display device **112** to provide tactile alerts, ensuring the operator is aware of important notifications even in noisy or visually cluttered environments. Variations of the display device **112** may include heads-up displays (HUDs) for augmented reality navigation or portable devices that can be carried by crew members.

The marine vessel **1** comprises an advanced driver assistance system (ADAS) **114.** The ADAS integrates with the computer system **100** to provide navigational aids and automate certain functions such as steering and throttle control. The ADAS **114** utilizes data from onboard sensors and environmental data services to maintain navigation paths and improve the efficiency of rescue operations. For example, the ADAS **114** can automatically adjust the vessel's **1** course to avoid obstacles while navigating towards the MOB. Variations of the ADAS **114** may include adaptive cruise control for maintaining safe speeds, collision avoidance systems, and automated docking features.

The marine vessel **1** comprises an environmental data service **116.** The environmental data service **116** is responsible for collecting and processing environmental data relevant to the vessel's **1** operation. Examples of such data include one or more of wind speed and direction, sea currents, weather conditions, and water temperature. The environmental data service **114** interfaces with the processing circuitry **102** to provide inputs that can enhance the accuracy of MOB position estimation and decision-making processes. Variations of the environmental data service **116** may include integration with satellite-based weather forecasting systems, real-time oceanographic data services, and/or local environmental sensors deployed around the vessel **1.**

The marine vessel **1** comprises one or more sensors **14,** which can include but are not limited to lidar, sonar, radar, and cameras. These sensors may be arranged around the vessel **1** to monitor its surroundings **5** and detect a MOB. Lidar sensors provide high-resolution 3D mapping capabilities, sonar sensors are effective in underwater detection, radar sensors offer long-range detection in various weather conditions, and cameras provide visual confirmation and identification. The sensing data obtained from these sensors are processed by the processing circuitry **102** to identify one or more detectable features of the MOB. Variations of the sensor suite may include thermal cameras for detecting heat signatures, infrared sensors for night-time operations, and multi-spectral sensors for enhanced detection capabilities in diverse environments.

**FIG. 2** is an exemplary schematic illustration of components involved in the management of a MOB situation. The process starts by receiving an operator request **10** for activation of a MOB mode **12** for the marine vessel **1.** This request **10** may be provided via a user interface **111** to the processing circuitry **102** from an input device **110.** A MOB situation refers to an incident where a person falls overboard from the marine vessel **1,** necessitating rescue operations to ensure the individual's safety. Such situations can arise due to various factors, including rough sea conditions, human error, sudden medical emergencies, or accidents.

The operator request **10** is a command initiated by an individual, typically a crew member or the vessel operator, to activate specific functionalities of the MOB management system. This request can be made through various means, depending on the design and capabilities of the user interface **111.** The operator request **10** triggers a system response to the MOB situation, to thereby activate a MOB mode **12.** The MOB mode **12** is thus an operational state of the marine vessel **1,** activated in response to the operator request **10.** The MOB mode **12** refers to a distinct configuration or state in which the computer system **100** operates to perform specific functions tailored to particular needs or scenarios. In the context of MOB management, activating the MOB mode **12** initiates a series of predefined actions and system behaviors designed to manage and resolve the MOB situation effectively.

Upon receiving the operator request **10,** the processing circuitry **102** activates the MOB mode **12** by controlling the activation of one or more sensors **14** configured to monitor the surroundings **5** of the marine vessel **1.** This activation process is associated with power conserving benefits and the reduction of false positives, which are concerns in maritime environments. The activation control involves the processing circuitry **102** sending specific signals to initiate the operation of the sensors **14.** This can be done in various ways, such as simultaneous activation, where all sensors **14** are activated together to provide immediate and comprehensive monitoring, sequential activation, where sensors **14** are activated in a predetermined sequence ensuring step-by-step coverage of the surroundings, or pattern-based activation where sensors are activated based on a specific pattern that prioritizes certain areas or types of monitoring depending on the situation's requirements. For example, the processing circuitry **102** might first activate radar sensors to scan for large obstacles and then follow up with optical cameras for detailed visual confirmation. This strategy can ensure efficient use of sensors and improve power conservation.

Activating sensors **14** in response to the operator request **10,** rather than having them always on or automatically triggered, offers several advantages. At sea, power resources can be limited, especially on smaller vessels. Activating the sensors **14** only when needed conserves energy, which may ensure that systems, oftentimes of critical character, remain operational for longer periods. Moreover, continuous operation or automatic triggers can lead to numerous false positives, confusing the operator and potentially delaying the rescue process. Operator-initiated activation allows for more controlled and accurate detection.

Monitoring the surroundings **5** refers to the sensors' **14** capability to detect and analyze various elements in the vessel's **1** environment. This includes identifying other vessels, obstacles, islands, marine wildlife, and any other potential hazards or objects of interest, as mentioned above. The monitoring may ensure that the vessel **1** can navigate safely and respond promptly to MOB situations.

In some examples, the processing circuitry **102** may be configured to display a confirmation prompt at a display device **112** of the marine vessel **1** in response to receiving the operator request **10.** The display device **112,** typically a graphical user interface, shows a prompt asking the operator to confirm the activation of the MOB mode **12.** Upon receiving a confirmation input from the operator via the display device, the processing circuitry **102** activates the MOB mode **12.** This two-step verification process may ensure that the activation is deliberate and reduce the risk of accidental triggers. It can thus provide an additional layer of security, confirming the operator's intent before mobilizing system resources.

In examples where the marine vessel **1** is a sailboat, the processing circuitry **102** may be configured to control the automatic navigation of the sailboat into the wind eye and/or manage the deployment of one or more sails. The "wind eye", also known as the "no-sail zone", is the area directly upwind where a sailboat cannot sail effectively. By navigating into the wind eye, the sailboat can be brought to a near standstill, which is often beneficial in a MOB situation. In addition, the processing circuitry **102** may be configured to start an engine via e.g. sending control signals thereto. This maneuver helps to stabilize the vessel **1** and reduce its forward momentum, making it easier to conduct the rescue operation without endangering the MOB **20** or complicating the retrieval process. The processing circuitry **102** may achieve this by interfacing with the sailboat's automatic navigation system. The processing circuitry **102** may calculates the desired heading to steer the vessel **1** into the wind eye and adjust the rudder and sails accordingly. In addition or as an alternative to controlling the navigation, the processing circuitry **102** can also manage the deployment of the sails. Depending on the situation, the system may furl (roll up) or reef (reduce the size of) the sails to reduce wind propulsion and further stabilize the sailboat. This can be particularly useful in strong wind conditions, where full sails could make the vessel **1** difficult to control. The capability to automatically navigate into the wind eye and control sail deployment may offer several advantages. It may reduce the need for manual intervention by the crew, allowing them to focus on the rescue operation. It may also enhance the safety and stability of the vessel **1** during the critical moments of retrieving the MOB **20,** reducing the risks associated with uncontrolled movement or excessive speed.

After activating the MOB mode **12,** the process continues by the processing circuitry **102** obtaining sensing data **16** from one or more of the sensors **14.** The sensing data **16** can refer to raw or processed information collected by the sensors **14** deployed on the vessel **1.** The sensing data **16** can take various forms depending on the type of sensor technology employed. The sensing data **16** can be gathered using both "dumb" sensors and "smart" sensors **14.** Dumb sensors **14** typically provide raw measurements without any internal processing, such as time-of-flight measurements from sonar or radar sensors that determine the distance to an object based on the time it takes for a signal to return. Smart sensors, on the other hand, may include built-in capabilities for image analysis or preliminary data processing, such as cameras with feature recognition or infrared sensors that can identify heat signatures.

The processing circuitry **102** is designed to handle and process all types of sensing data **16,** whether it is raw measurements from dumb sensors or pre-processed data from smart sensors. This versatility assists the computer system **100** to effectively integrate and analyze various data streams to identify a MOB **20.**

The sensing data **16** identifies at least one detectable feature **22** of the MOB **20.** The detectable feature **22** refers to any characteristic or attribute of the MOB **20** that can be identified and tracked by the sensors **14.** Detectable features **22** can include, but are not limited to, visual markers such as color or shape, reflective elements, heat signatures, or movement patterns. These features are used for differentiating the MOB **20** from other objects in the surroundings and ensuring accurate tracking. There can be many detectable features **22** associated with one MOB **20,** or multiple MOBs **20** may have their own unique set of detectable features **22.**

In some examples, the detectable feature **22** is a reflective element, and the sensing data **16** is reflectivity data. Reflective elements are materials or objects that reflect sensor signals, such as radar or lidar pulses, back to the source. These elements can be integrated into life jackets, personal flotation devices, or clothing to enhance their detectability in the water.

The reflective element may comprise predetermined reflectivity properties. The processing circuitry **102** is configured to map the obtained reflectivity data with these predetermined reflectivity properties to validate the identity of the MOB **20.** This may involve comparing the sensed reflectivity patterns with known characteristics of the reflective element to confirm that the detected object is indeed the MOB **20.** For instance, the processing circuitry **102** might recognize a specific type of reflective tape on a life jacket, ensuring that the tracking is accurate and further reducing the likelihood of false positives. This can distinguish certain reflective elements from others, for example such that false positives are not generated for the detection of a reflective element of a buoy (or similar), when looking for a reflective element of a life vest of the MOB **20.**

The procedure follows with the generation of a MOB map **30** based on the sensing data **16.** The MOB map **30** is a digital representation of the marine vessel's **1** surroundings **5,** including any detected objects and the marine environment. The MOB map **30** is created by processing the sensing data **16** to render a visual layout that depicts the spatial arrangement of various elements around the vessel. The MOB map **30** may be used for providing real-time situational awareness to the vessel's **1** crew.

Graphical indications on the MOB map **30** are visual markers that represent the position of specific objects, for example the MOB **20** thanks to its detectable feature(s) **22.** These indications can take various forms, such as icons, symbols, or highlighted areas, designed to be recognizable by the operator. The position of the MOB **20** in relation to the position of the marine vessel **1** is depicted using coordinates or reference points that show where the MOB **20** is located relative to the vessel's **1** current location. This may involve calculating the MOB's **20** position using data from the sensors **14** and representing it on the MOB map **30** with respect to the vessel's coordinates, for example using a grid or compass-based system for accuracy.

In some examples, the processing circuitry **102** may be is further configured to display the MOB map **30** at a display device **112** on the marine vessel **1** (i.e., to "provide" the MOB map **30**). The display device **112,** typically including graphical user interface as discussed above, shows the MOB map **30,** preferably in real-time, complete with graphical indications of the MOB's **20** position in relation to the vessel **1.** This allows the operator to have visual access to critical information, facilitating quick and informed decision-making during a rescue operation. The MOB map **30** displayed on the display device **112** provides a comprehensive view of the current situation, highlighting the MOB's **20** location and any relevant environmental features. For example, if the MOB **20** is detected to the starboard side of the vessel **1,** the MOB map **30** may show the position relative to the vessel's **1** bow and stern, enabling the crew to navigate towards the MOB **20.**

The next step in the process involves estimating the position of the MOB **20** based on the latest known position of at least one detectable feature **22** and the current position of the marine vessel **1.** The term "estimate" refers to a calculated approximation of the MOB's **20** location, which may involve some level of uncertainty or error margin. The "latest known position" of the detectable feature **22** is the most recent spatial data point where the feature was observed by the sensors **14.** This can be known by continuously storing the positional data of the detectable feature **22** as it is monitored. The processing circuitry **102** may keep a record of these positions in a data storage unit and fetch the most recent one when needed for estimation. This stored data allows the processing circuitry **102** to track movement patterns and predict the current position of the MOB **20** by comparing it to the positional data of the marine vessel **1.**

The positional data of the marine vessel **1** in relation to the MOB **20** can be known using various methods. One common method is GPS or other global position data (e.g. GNSS/GLONASS), which provides precise global coordinates for both the vessel **1** and the MOB **20.** However, GPS is not necessary, as relative positional differences may be sufficient. Other methods include using onboard navigation systems that track the vessel's **1** movement through inertial measurement units (IMUs) like accelerometers, gyroscopes and magnetometers. These onboard navigation systems can provide the position of the marine vessel **1** relative to a known starting point or in relation to the detected MOB **20.** For example, the processing circuitry **102** can use radar, sonar or lidar data to measure the distance and angle of the MOB **20** from the vessel **1.** By combining this information with the vessel's **1** own positional data, the processing circuitry **102** can estimate the current position of the MOB **20.** This relative positioning method may be useful in situations where GPS signals may be weak or unavailable, such as in dense fog or heavy storms.

The estimation may be particularly effective in cases where the processing circuitry **102** experiences a failure to obtain sensing data **16** from the one or more sensors **14.** In these cases the processing circuitry **102** may be configured to automatically perform the estimation of the MOB's **20** position in such occurrences. A failure to obtain sensing data **16** can occur due to various reasons, such as sensor malfunctions, obstructions, or adverse environmental conditions that impede the sensors' **14** ability to collect accurate data. When this happens, the processing circuitry **102** is automatically controlled to instead of the sensing data **16** rely on the estimation.

The processing circuitry **102** may be configured to enhance the accuracy of MOB position estimation by utilizing historical location data of previous MOB incidents. Historical location data refers to the recorded positions and movements of past MOB events that have been stored, such as in the data storage unit described above. Previous MOB incidents are past occurrences where individuals fell overboard, and their locations and rescue outcomes were documented. By analyzing this data, the processing circuitry **102** can detect patterns and predict the likely movements of the MOB **20** based on similar past events. For instance, if historical data shows that MOBs tend to drift a certain distance in a specific direction under similar environmental conditions, the system can use this information to refine its current estimation.

For example, the marine vessel **1** may obtain historical location data from one or more other marine vessels that have previously operated or are currently operating in corresponding surroundings **5** as the marine vessel **1,** and/or from offboard systems such as a fleet manager system. This data can be valuable in improving the accuracy and reliability of MOB position estimations. One example of obtaining such historical location data is through an Automatic Identification System (AIS). AIS is a maritime communication system that allows vessels to exchange real-time information about their positions, movements, and other relevant data. The AIS data is typically transmitted over Very High Frequency (VHF) radio waves, ensuring a broad range of coverage and reliable communication even in remote areas. By integrating AIS data, the computer system **100** can access a wealth of historical location information from other vessels. This includes data on previous MOB incidents, typical drift patterns in specific environmental conditions, and the movement trajectories of other vessels in the vicinity. The processing circuitry **102** can retrieve this AIS data and use it to enhance the current MOB position estimation.

For instance, if the AIS data indicates that other vessels in similar surroundings have encountered MOB situations where the individuals drifted in a particular direction due to prevailing currents and winds, this information can be used to predict the likely movement of the current MOB **20.** By comparing the AIS data with real-time environmental data, the processing circuitry **102** can dynamically adjust the MOB's estimated position, providing a more accurate and reliable tracking solution. This integration of AIS data not only leverages the collective experience of multiple vessels but also ensures that the system remains up-to-date with the latest navigational and environmental conditions. Consequently, the use of AIS data may enhance the situational awareness of the crew, enabling more informed decision-making and improving the overall effectiveness of the rescue operation.

Following the examples above, the processing circuitry **102** may also be configured to obtain other types of information via AIS data, such as environmental data obtained by one or more other vessels' respective computer systems.

The processing circuitry **102** can be further configured to improve MOB position estimation by obtaining environmental data of the surroundings **5** of the marine vessel **1.** The environmental data may include parameters such as wind speed, wind direction, sea currents, and weather conditions. These factors influence the movement of the MOB **20,** especially in more severe weather conditions, and are thus accounted for in some examples to ensure accurate tracking estimation.

Based on the environmental data, the processing circuitry **102** may be configured to calculate a drift vector. In these contexts, the drift vector is a mathematical representation of the MOB's **20** movement influenced by environmental conditions. The drift vector may be defined as a vector that combines the effects of wind speed, wind direction, and current flow. Mathematically, if *̅W̅*̅ represents the wind vector (indicating wind direction and wind strength) and *̅C̅*̅ represents the current vector, the drift vector *̅D̅*̅ can be expressed as *D̅ = W̅ + C̅*. This vector indicates both the direction and magnitude of the MOB's **20** drift, allowing the processing circuitry **102** to estimate its position more accurately.

The estimation process may involve a continuous update of the MOB's **20** position as new sensing data is obtained. This dynamic updating can ensure that the estimated position remains as accurate as possible, allowing the crew to effectively navigate towards the MOB **20.** The processing circuitry's **102** ability to adapt to changing conditions and incorporate various data sources makes it a robust tool for managing MOB situations and enhancing the safety of individuals at sea. Continuous intervals refer to regularly spaced time intervals at which the processing circuitry **102** recalculates the MOB's **20** position. For example, the processing circuitry **102** might update the estimation every second or every few seconds, depending on the processing capabilities and the urgency of the situation. The estimation process may take into account both the movement of the marine vessel **1** and the calculated drift vector. As the vessel **1** moves, its position relative to the MOB **20** changes, requiring constant recalculations to maintain accurate tracking. By integrating the vessel's **1** global positioning data or relative positional data with the drift vector, the processing circuitry **102** may provide a dynamic and precise estimation of the MOB's **20** current location.

The process continues by updating the MOB map **30** based on the estimation of the position of the MOB **20.** This may be done one or more times (1... * as indicated in the figure). This is for maintaining real-time situational awareness and ensuring that the rescue operation can adapt to any changes in the MOB's **20** location and optionally environmental conditions. Once the processing circuitry **102** has estimated the position of the MOB **20,** this information is used to update the graphical indications on the MOB map **30.** The MOB map **30** may thus be a dynamic digital representation that continuously reflects the latest data about the MOB's **20** position relative to the marine vessel **1.**

The processing circuitry **102** recalculates the MOB's **20** position at continuous intervals, integrating new sensing data, changes in the vessel's **1** movement, and optionally environmental factors such as wind speed, wind direction, and current flow. The updated MOB map **30** displays real-time graphical indications of the MOB's **20** position, which can include icons, symbols, or highlighted areas that are easy for the operator to recognize. These indications help the crew to quickly identify the MOB's **20** location and adjust their navigation accordingly. The map can also include additional information, such as the estimated drift vector and the current position of the vessel, providing a comprehensive view of the rescue scenario.

For example, if the MOB **20** is drifting due to strong currents, the updated MOB map **30** may show the new position of the MOB **20,** accounting for this drift. The processing circuitry **102** may also display a predicted drift path **21** of the MOB **20** based on the calculated drift vector, allowing the crew to anticipate future movements and plan their rescue efforts more effectively.

Similar to the initial map generated based on the sensing data **16,** the processing circuitry **102** may be configured to display the updated MOB map **30** on the display device **112** of the marine vessel **1.** The display device **112** may provide additional features such as zooming in and out, panning across different areas of the MOB map **30,** and overlaying various data layers, such as environmental conditions and vessel navigation paths. These features allow the crew to customize their view and focus on the most relevant information for the rescue operation.

In some examples, the processing circuitry **102** may be configured to automatically deactivate the MOB mode **12** by controlling the deactivation of one or more sensors **14** in response to the successful retrieval of the MOB **20.** This process can ensure that the system transitions smoothly from the active search and rescue phase to a normal operational state once the MOB has been safely recovered. Upon confirming the successful retrieval of the MOB **20,** which can be detected through various means such as manual input from the operator, sensor confirmation, or integration with other onboard systems like cameras or RFID tags, the processing circuitry **102** sends signals to deactivate the sensors that were actively monitoring the surroundings. This process may conserve power by shutting down sensors **14** that are no longer needed, which may be important in maritime environments where power resources may be limited. It may also reduce the cognitive load on the operator by automating the transition process, allowing the crew to focus on post-rescue procedures and the well-being of the retrieved individual. It can also reduce the risk of false positives or unnecessary alerts by ensuring that the system is only active when required.

The deactivation process may involve systematically turning off the sensors **14** in a controlled manner to ensure that all components return to their standby or normal operational states without causing disruptions or errors. This may include powering down radar, sonar, lidar, and optical cameras that were used during the MOB mode **12.** The processing circuitry **102** can ensure that this process is smooth and does not interfere with other systems onboard the marine vessel **1.**

The deactivation process may also be manually performed, for example using similar techniques as to how it was activated.

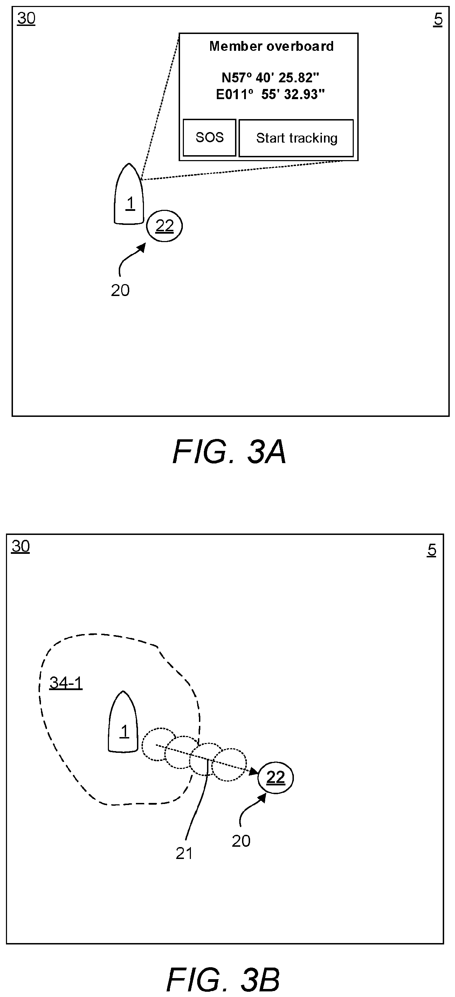

The process does not necessarily end here. On the contrary, the present disclosure presents one or more additional steps that can be included in the management of the MOB situation. These will now be explained in more detail according to the exemplary visualizations of **FIGs. 3A-D.**

**FIG. 3A** depicts an initial phase of a search procedure when a crew member falls overboard. This figure provides a visual representation of the sequence of events and system responses that occur immediately following the detection of a MOB incident. When a crew member falls overboard, the first action is for the operator to recognize the incident and send an operator request to activate the MOB mode **12.** As mentioned above, the operator may be any member of the crew of the vessel **1.** This request is typically made through an input device, such as a touchscreen, button, or voice command, which communicates with the processing circuitry **102** of the computer system **100.** The activation of the MOB mode **12** triggers the system **100** to initiate a series of predefined actions designed to manage the MOB situation effectively.

Once the MOB mode **12** is activated, the processing circuitry **102** controls the activation of one or more sensors **14** configured to monitor the surroundings **5** of the marine vessel **1.** These sensors **14,** which can include radar, sonar, lidar, and cameras, start scanning the environment to detect the MOB **20.** In this scenario, the MOB **20** has a detectable feature **22,** such as a life vest with a specific reflectivity value that can be identified. As the sensors **14** collect sensing data **16,** the processing circuitry **102** analyzes this data to identify the MOB's **20** detectable feature **22.** The processing circuitry **102** then generates a MOB map **30** based on this analyzed data. On the MOB map **30,** graphical indications represent the position of the MOB **20** and its detectable feature **22.** For instance, the life vest's reflectivity value might be highlighted with a specific icon or color on the map, making it easily recognizable to the operator. The MOB map **30** also displays the current position of the marine vessel **1,** allowing the crew to see the exact location of the MOB **20** in relation to the vessel's **1** position.

In **FIG. 3A****,** the display device **112** receives a prompt asking the operator to confirm the activation of the MOB mode **12,** effectively initiating the tracking of the MOB. Additionally or alternatively, the prompt may include an SOS option, allowing the operator to call for external aid if necessary. The display window also presents the latest coordinates where the MOB **20** was identified, providing the operator with information to begin the rescue operation promptly and efficiently. While not explicitly shown in the other visualizations of other parts of the rescue procedure, this information may persist throughout the rescue operation.

**FIG. 3B** is a continuation of the exemplary schematic illustration shown in **FIG. 3A****,** depicting a second part of the search procedure where the search for the MOB **20** has been initiated. In this phase, the MOB **20** has started to drift away from the marine vessel **1,** necessitating further action to ensure a successful rescue. As the MOB **20** begins to drift, the sensors **14** and processing circuitry **102** continue to monitor and analyze the surroundings **5.** The drift path **21** of the MOB **20** is highlighted on the MOB map **30,** providing a graphical indication of the direction and distance the MOB **20** is moving away from the vessel **1.** This drift path **21** is represented by directional arrows or lines on the MOB map **30,** showing the estimated trajectory based on the current environmental conditions such as wind speed, wind direction, and current flow. An position estimation of the MOB **20** complements the sensing data **16** for discovering and updating the position of the MOB **20.**

The processing circuitry **102** is configured to identify a searchable area **34-1** on the MOB map **30.** This searchable area **34-1** is a region where the MOB **20** is likely to be found based on its drift path **21** and are prioritized for the search operation. As the marine vessel **1** navigates through the searchable area **34-1,** the processing circuitry **102** marks the area **34-1** as visited. This marking process is based on the vessel's **1** current position, which is continuously updated using methods described herein. When the vessel **1** enters the searchable area **34-1,** the processing circuitry **102** records this action and visually updates the MOB map **30** to indicate that the area **34-1** has been searched. This can be done using color changes, checkmarks, or other graphical indicators to differentiate between searched and unsearched areas. Updating the MOB map **30** based on the marked searchable area **34-1** can ensure that the crew has a clear and organized view of the search progress. It may help to prevent redundant searches and allows the crew to focus their efforts on areas that have not yet been covered. This systematic approach enhances the efficiency of the rescue operation by ensuring that potential locations of the MOB **20** are thoroughly investigated.

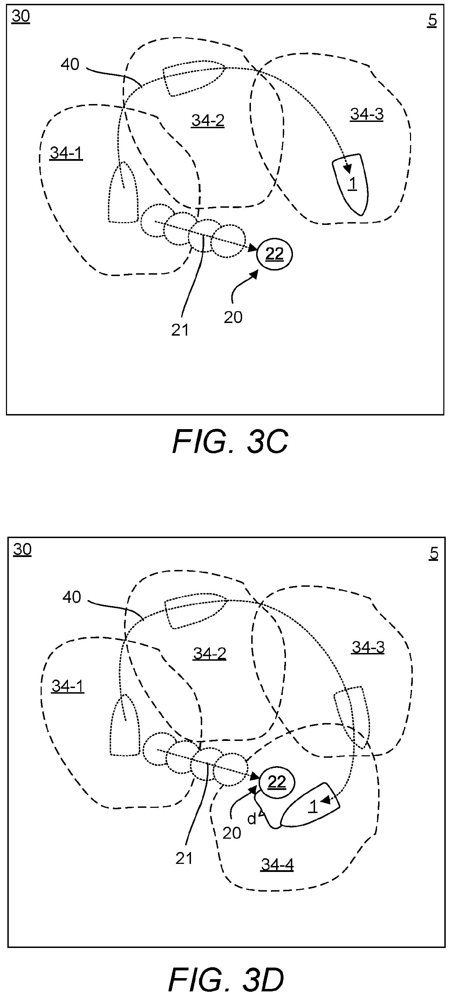

**FIG. 3C** continues from **FIG. 3B****,** illustrating a third part of the search procedure where the marine vessel **1** follows a systematic search path **40** towards the estimated position of the MOB **20.** In this phase, the vessel **1** navigates through additional searchable areas **34-1, 34-2, 34-3** while adhering to a calculated search path **40.** As the vessel **1** travels between these areas **34-1, 34-2, 34-3,** it marks each area **34-1, 34-2, 34-3** as visited, updating the MOB map **30** to reflect the progress of the search. The searchable areas **34-1, 34-2, 34-3** are dynamically identified based on the latest estimation of the MOB's **20** position, and the search path **40** is designed to cover these areas efficiently. This can ensure that no potential location is overlooked and enhances the likelihood of locating the MOB **20.**

The search path **40** is generated by the processing circuitry **102,** taking into account the position of the MOB **20** in relation to the vessel's **1** current position. The path **40** may be adapted to balance thoroughness and speed, guiding the vessel **1** through the searchable areas **34-1, 34-2, 34-3** and ultimately leading it to the estimated position of the MOB **20.** Once the search path **40** is generated, the processing circuitry **102** provides one or more navigational instructions **42** to guide the vessel **1** along this path **40.** These instructions can include specific headings, speeds, and maneuvers required to navigate through the searchable areas. The navigational instructions **42** may be displayed on the display device **112.**

The search path **40** may be adapted based on the obtained environmental data, allowing for dynamic adjustments to the vessel's **1** search strategy. For example, if the environmental data indicates strong currents or high winds, the processing circuitry **102** can modify searchable areas **34** to be larger, accounting for the increased drift of the MOB **20.** This can ensure that the search remains effective even under challenging conditions. By considering factors such as water currents, wind speed, and visibility, the system can improve the search path **40** to increase the likelihood of locating the MOB **20** quickly and safely.

In some examples, the processing circuitry **102** may be further configured to cause autonomous control of the marine vessel **1** to follow the search path **40** based on the provided navigational instructions **42.** This means that the processing circuitry **102** can take over control of the vessel's **1** navigation, steering it along the predefined path without requiring manual input from the crew. This may be done by control via the ADAS **114.** The ADAS **114** continuously monitors the vessel's **1** position, adjusts its course as needed, and ensures that the search path **40** is followed. This autonomous capability may be particularly valuable in situations where the crew may be occupied with other tasks, when precise navigation is critical to the success of the rescue operation, or when the sight is bad due to darkness and/or fog. By incorporating autonomous control, the processing circuitry **102** may reduce the cognitive load on the crew and increase the efficiency of the search procedure. The processing circuitry **102** allows the vessel **1** to navigate through complex environments and maintain an optimal search pattern, ultimately improving the chances of locating and rescuing the MOB **20.**

**FIG. 3D** follows from **FIG. 3C****,** illustrating a fourth part of the search procedure where the search path **40** is completed, and a safety distance **d** is maintained from the MOB **20.** As the marine vessel 1 navigates through the predefined search path **40** and systematically visits the searchable areas **34-1, 34-2, 34-3,** it ultimately arrives at the estimated position of the MOB **20,** located in the area **34-4.**

Maintaining a safety distance **d** from the MOB **20** can ensure that the vessel **1** does not inadvertently harm the individual in the water with e.g. its propellers or hull. This safety distance **d** is visually represented on the MOB map **30,** providing the crew with a clear indication of the boundary that should not be crossed. The processing circuitry **102** can enforce this safety distance **d** by controlling the vessel's **1** movements and ensuring it remains at a safe distance from the MOB **20** while facilitating the rescue operation.

In some examples, the processing circuitry **102** may be configured to adapt the safety distance **d** based on one or more properties of the marine vessel **1** and obtained environmental data of the surroundings **5.** Properties of the vessel can include its size, maneuverability, and speed, while environmental data can include factors such as wind speed, wind direction, sea currents, and weather conditions. By considering these variables, the processing circuitry **102** can dynamically adjust the safety distance. For instance, in rough sea conditions, a larger safety distance might be necessary to account for the vessel's **1** movement and ensure the MOB's **20** safety.

In some examples, the processing circuitry **102** may be configured to calculate an error margin for the estimated position of the MOB **20** and adjust the search path **40** to account for this error margin. An error margin represents the potential deviation in the estimated position due to uncertainties or inaccuracies in the sensing data **16** and environmental conditions. By calculating this margin, the processing circuitry **102** can adjust the search path **40** to ensure that all possible locations of the MOB **20** are covered, increasing the likelihood of a successful rescue. For example, if the error margin indicates that the MOB's **20** position could vary within a certain radius, the search path **40** may be adjusted to encompass this entire area, ensuring no potential location is overlooked. This can be done by identifying one or more additional searchable areas **34,** or adapting the size of one or more searchable areas **34.** This proactive approach can enhance the thoroughness of the search operation and mitigate the risks associated with estimation errors.

According to the above, **FIGs. 3A-D** illustrate a comprehensive search procedure for managing a man-overboard (MOB) situation, starting with the initial detection and activation of MOB mode, followed by the systematic search and tracking of the MOB **20.** In **FIG. 3A****,** the operator activates the MOB mode, leading to the generation of a MOB map **30** that highlights the MOB's **20** detectable features **22.** **FIG. 3B** shows the identification of a searchable area **34-1** and the marking of this area **34-1** as visited, while **FIG. 3C** demonstrates the marine vessel **1** following a calculated search path **40** through many areas **34-1, 34-2, 34-3** to locate the MOB **20.** Finally, in **FIG. 3D** the MOB **20** is found in the area **34-4,** which further emphasizes maintaining a safety distance **d** from the MOB **20.** Optionally, the search path **40** may be adjusted dynamically on the basis of an error margin to ensure a thorough and safe rescue operation.

It shall be understood that the searchable areas **34** may be of any size, dimension and/or number, the search path **40** may be any length with any number of turns (to e.g. avoid obstacles/landmasses), the map **30** cover any suitable sea range (e.g. ranging from tens of meters for small areas up to many kilometers for larger areas), the safety distance **d** be of any length/direction, the MOB's **20** drift path **21** of any length/direction, and so forth. The MOB operation will depend on factors explained herein, such as vessel properties, environment data, MOB characteristics, etc.

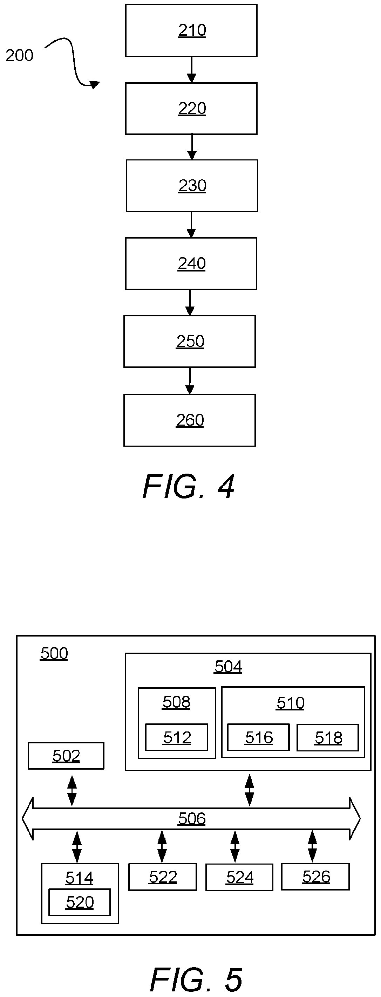

**FIG. 4** is a flowchart of a computer-implemented method **200** for managing a MOB situation for a marine vessel. The method **200** is carried out by processing circuitry of a computer system. The method **200** comprises receiving **210** an operator request for activation of a MOB mode for the marine vessel. The method **200** further comprises, in response to receiving the operator request, activating **220** the MOB mode by controlling activation of one or more sensors configured to monitor surroundings of the marine vessel. The method **200** further comprises obtaining **230** sensing data from said one or more sensors identifying at least one detectable feature of a MOB in said surroundings of the marine vessel. The method **200** further comprises generating **240** a MOB map based on the sensing data, the MOB map displaying one or more graphical indications of a position of the MOB in relation to a position of the marine vessel. The method **200** further comprises estimating **250** said position of the MOB at least based on a latest known position of said at least one detectable feature and a current position of the marine vessel. The method **200** further comprises updating **260** the MOB map based on the estimation of the position of the MOB.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the invention being set forth in the following claims.

## Claims

1. A computer system (100; 500) for managing a man-overboard, MOB, situation for a marine vessel (1), the computer system (100; 500) comprising processing circuitry (102; 502) configured to:
receive an operator request (10) for activation of a MOB mode (12) for the marine vessel (1);
in response to receiving the operator request (10), activate the MOB mode (12) by controlling activation of one or more sensors (14) configured to monitor surroundings (5) of the marine vessel (1);
obtain sensing data (16) from said one or more sensors (14) identifying at least one detectable feature (22) of a MOB (20) in said surroundings (5) of the marine vessel (1);
generate a MOB map (30) based on the sensing data (16), the MOB map (30) displaying one or more graphical indications of a position of the MOB (20) in relation to a position of the marine vessel (1);
estimate said position of the MOB (20) at least based on a latest known position of said at least one detectable feature (22) and a current position of the marine vessel (1); and
update the MOB map (30) based on the estimation of the position of the MOB (20).

2. The computer system (100; 500) of claim 1, wherein the processing circuitry (102; 502) is further configured to:
identify one or more searchable areas (34) in the MOB map (30);
mark a searchable area (34) as visited in response to the marine vessel (1) having visited said searchable area (34) based on its current position; and
update the MOB map (30) based on the marked searchable area (34).

3. The computer system (100; 500) of claim 2, wherein the processing circuitry (102; 502) is further configured to:
generate a search path (40) for the marine vessel (1) based on the one or more searchable areas (34) and the position of the MOB (20) in relation to the position of the marine vessel (1); and
provide one or more navigational instructions (42) based on the search path (40).

4. The computer system (100; 500) of any preceding claim, wherein the processing circuitry (102; 502) is configured to automatically perform the estimation of the position of the MOB (20) in response to a failure to obtain sensing data (16) from the one or more sensors (14).

5. The computer system (100; 500) of any preceding claim, wherein the processing circuitry (102; 502) is further configured to:
obtain environmental data of the surroundings (5) of the marine vessel (1); and
estimate said position of the MOB (20) based on said environmental data.

6. The computer system (100; 500) of claim 5, wherein the obtained environmental data comprises one or more of wind speed, wind direction and current flow, and wherein the processing circuitry (102; 502) is configured to:
calculate a drift vector for the MOB (20) based on said one or more of wind speed, wind direction and current flow; and
estimate the position of the MOB (20) based on the drift vector.

7. The computer system (100; 500) of claim 6, wherein the estimation of the position of the MOB (20) is continuous, and wherein the processing circuitry (102; 502) is configured to update the estimated position of the MOB (20) at continuous intervals based on the movement of the marine vessel (1) and the calculated drift vector.

8. The computer system (100; 500) of any preceding claim, wherein said at least one detectable feature (22) is a reflective element and the sensing data (16) is reflectivity data.

9. The computer system (100; 500) of claim 8, wherein the reflective element comprises predetermined reflectivity properties, the processing circuitry (102; 502) being configured to map the obtained reflectivity data with said predetermined reflectivity properties to validate the identity of the MOB (20).

10. The computer system (100; 500) of any preceding claim, wherein the processing circuitry (102; 502) is further configured to receive the operator request (10) for activation of the MOB mode (12) via an input device (110).

11. The computer system (100; 500) of claim 10, wherein the processing circuitry (102; 502) is further configured to display the MOB map (30) at a display device (112) of the marine vessel (1).

12. A marine vessel (1) comprising the computer system (100; 500) of any of claims 1-11.

13. A computer-implemented method (200) for managing a man-overboard, MOB, situation for a marine vessel (1), comprising:
receiving (210), by processing circuitry (102; 502) of a computer system (100; 500), an operator request (10) for activation of a MOB mode (12) for the marine vessel (1);
in response to receiving the operator request (10), activating (220), by the processing circuitry (102; 502), the MOB mode (12) by controlling activation of one or more sensors (14) configured to monitor surroundings (5) of the marine vessel (1);
obtaining (230), by the processing circuitry (102; 502), sensing data (16) from said one or more sensors (14) identifying at least one detectable feature (22) of a MOB (20) in said surroundings (5) of the marine vessel (1);
generating (240), by the processing circuitry (102; 502), a MOB map (30) based on the sensing data (16), the MOB map (30) displaying one or more graphical indications of a position of the MOB (20) in relation to a position of the marine vessel (1);
estimating (250), by the processing circuitry (102; 502), said position of the MOB (20) at least based on a latest known position of said at least one detectable feature (22) and a current position of the marine vessel (1); and
updating (260), by the processing circuitry (102; 502), the MOB map (30) based on the estimation of the position of the MOB (20).

14. A computer program product comprising program code for performing, when executed by the processing circuitry (102; 502), the method (200) of claim 13.

15. A non-transitory computer-readable storage medium comprising instructions, which when executed by the processing circuitry (102; 502), cause the processing circuitry (102; 502) to perform the method (200) of claim 13.

## Patentansprüche

1. Computersystem (100; 500) zum Verwalten einer Mann-über-Bord-, MOB-, Situation für ein Wasserfahrzeug (1), wobei das Computersystem (100; 500) eine Verarbeitungsschaltung (102; 502) umfasst, die konfiguriert ist zum:
Empfangen einer Bedieneranforderung (10) zur Aktivierung eines MOB-Modus (12) für das Wasserfahrzeug (1);
als Reaktion auf das Empfangen der Bedieneranforderung (10), Aktivieren des MOB-Modus (12) durch Steuern der Aktivierung eines oder mehrerer Sensoren (14), die dazu konfiguriert sind, die Umgebung (5) des Wasserfahrzeugs (1) zu überwachen;
Erhalten von Erfassungsdaten (16) von dem einen oder den mehreren Sensoren (14), die mindestens ein detektierbares Merkmal (22) einer MOB (20) in der Umgebung (5) des Wasserfahrzeugs (1) identifizieren;
Erzeugen einer MOB-Karte (30) basierend auf den Erfassungsdaten (16), wobei die MOB-Karte (30) eine oder mehrere grafische Anzeigen einer Position der MOB (20) in Bezug auf eine Position des Wasserfahrzeugs (1) darstellt;
Schätzen der Position der MOB (20) zumindest basierend auf einer zuletzt bekannten Position des mindestens einen detektierbaren Merkmals (22) und einer aktuellen Position des Wasserfahrzeugs (1); und
Aktualisieren der MOB-Karte (30) basierend auf der Schätzung der Position der MOB (20).

2. Computersystem (100; 500) nach Anspruch 1, wobei die Verarbeitungsschaltung (102; 502) ferner konfiguriert ist zum:
Identifizieren eines oder mehrerer absuchbarer Bereiche (34) in der MOB-Karte (30);
Markieren eines absuchbaren Bereichs (34) als besucht als Reaktion darauf, dass das Wasserfahrzeug (1) den besagten absuchbaren Bereich (34) basierend auf seiner aktuellen Position besucht hat; und
Aktualisieren der MOB-Karte (30) basierend auf dem markierten absuchbaren Bereich (34).

3. Computersystem (100; 500) nach Anspruch 2, wobei die Verarbeitungsschaltung (102; 502) ferner konfiguriert ist zum:
Erzeugen eines Suchpfads (40) für das Wasserfahrzeug (1) basierend auf dem einen oder den mehreren absuchbaren Bereichen (34) und der Position der MOB (20) in Bezug auf die Position des Wasserfahrzeug (1); und
eine oder mehrere Navigationsanweisungen (42) basierend auf dem Suchpfad (40) bereitzustellen.

4. Das Computersystem (100; 500) nach einem der vorhergehenden Ansprüche, wobei die Verarbeitungsschaltung (102; 502) dazu eingerichtet ist, automatisch die Schätzung der Position von MOB (20) als Reaktion auf ein Fehlschlagen des Erhaltens von Sensordaten (16) von dem einen oder den mehreren Sensoren (14) durchzuführen.

5. Das Computersystem (100; 500) nach einem der vorhergehenden Ansprüche, wobei die Verarbeitungsschaltung (102; 502) ferner dazu eingerichtet ist:
Umgebungsdaten der Umgebung (5) des Wasserfahrzeugs (1) zu erhalten; und
die genannte Position des MOB (20) basierend auf den genannten Umgebungsdaten zu schätzen.

6. Das Computersystem (100; 500) nach Anspruch 5, wobei die erhaltenen Umgebungsdaten eines oder mehrere von Windgeschwindigkeit, Windrichtung und Strömung umfassen, und wobei die Verarbeitungsschaltung(102; 502) dazu eingerichtet ist:
einen Driftvektor für den MOB (20) basierend auf dem genannten einen oder den mehreren von Windgeschwindigkeit, Windrichtung und Strömung zu berechnen; und
die Position des MOB (20) basierend auf dem Driftvektor zu schätzen.

7. Das Computersystem (100; 500) nach Anspruch 6, wobei die Schätzung der Position von MOB (20) kontinuierlich erfolgt, und wobei die Verarbeitungsschaltung (102; 502) dazu eingerichtet ist, die geschätzte Position des MOB (20) in kontinuierlichen Intervallen basierend auf der Bewegung des Wasserfahrzeugs (1) und dem berechneten Driftvektor zu aktualisieren.

8. Das Computersystem (100; 500) nach einem der vorhergehenden Ansprüche, wobei das genannte mindestens eine detektierbare Merkmal (22) ein reflektierendes Element ist und die Sensordaten (16) Reflektivitätsdaten sind.

9. Das Computersystem (100; 500) nach Anspruch 8, wobei das reflektierende Element vorbestimmte Reflektivitätseigenschaften umfasst, wobei die Verarbeitungsschaltung (102; 502) dazu eingerichtet ist, die erhaltenen Reflektivitätsdaten mit den genannten vorbestimmten Reflektivitätseigenschaften abgleichen, um zu validieren die Identität des MOB (20).

10. Das Computersystem (100; 500) nach einem der vorhergehenden Ansprüche, wobei die Verarbeitungsschaltung (102; 502) ferner dazu konfiguriert ist, die Bedieneranfrage (10) zur Aktivierung des MOB-Modus (12) über eine Eingabevorrichtung (110) zu empfangen.

11. Das Computersystem (100; 500) nach Anspruch 10, wobei die Verarbeitungsschaltung (102; 502) ferner dazu konfiguriert ist, die MOB-Karte (30) an einer Anzeigevorrichtung (112) des Wasserfahrzeugs (1) anzuzeigen.

12. Ein Wasserfahrzeug (1), umfassend das Computersystem (100; 500) nach einem der Ansprüche 1-11.

13. Ein computerimplementiertes Verfahren (200) zum Verwalten einer Mann-über-Bord-, MOB, Situation für ein Wasserfahrzeug (1), umfassend:
Empfangen (210) durch eine Verarbeitungsschaltung (102; 502) eines Computersystems (100; 500), einer Bedieneranforderung (10) zur Aktivierung eines MOB-Modus (12) für das Wasserfahrzeug (1);
als Reaktion auf das Empfangen der Bedieneranforderung (10), Aktivieren (220) durch die Verarbeitungsschaltung (102; 502) des MOB-Modus (12) durch Steuern der Aktivierung eines oder mehrerer Sensoren (14), die dazu konfiguriert sind, eine Umgebung (5) des Wasserfahrzeugs (1) zu überwachen;
Erhalten (230) durch die Verarbeitungsschaltung (102; 502) von Erfassungsdaten (16) von besagten einem oder mehreren Sensoren (14), die mindestens ein detektierbares Merkmal (22) eines MOB (20) in besagter Umgebung (5) des Wasserfahrzeugs (1) identifizieren;
Erzeugen (240) durch die Verarbeitungsschaltung (102; 502) einer MOB-Karte (30) auf Grundlage der Erfassungsdaten (16), wobei die MOB-Karte (30) eine oder mehrere grafische Anzeigen einer Position des MOB (20) in Bezug auf eine Position des Wasserfahrzeugs (1) darstellt;
Schätzen (250) durch die Verarbeitungsschaltung (102; 502) der besagten Position des MOB (20) zumindest auf Grundlage einer zuletzt bekannten Position des besagten mindestens einen detektierbaren Merkmals (22) und einer aktuellen Position des Wasserfahrzeugs (1); und
Aktualisieren (260) durch die Verarbeitungsschaltung (102; 502) der MOB-Karte (30) auf Grundlage der Schätzung der Position des MOB (20).

14. Ein Computerprogrammprodukt, umfassend Programmcode zur Durchführung, der, wenn er durch die Verarbeitungsschaltung (102; 502) ausgeführt wird, das Verfahren (200) nach Anspruch 13 durchführt.

15. Ein nichtflüchtiges computerlesbares Speichermedium, umfassend Anweisungen, die bei Ausführung durch die Verarbeitungsschaltung (102; 502) bewirken, dass die Verarbeitungsschaltung (102; 502) das Verfahren (200) nach Anspruch 13 durchführt.

## Revendications

1. Un système informatique (100 ; 500) destiné à gérer une situation d'homme à la mer, MOB, pour un navire (1), le système informatique (100 ; 500) comprenant des circuits de traitement (102 ; 502) configurés pour :
recevoir une demande d'un opérateur (10) pour l'activation d'un mode MOB (12) pour le navire (1) ;
en réponse à la réception de la demande de l'opérateur (10), activer le mode MOB (12) en commandant l'activation d'un ou plusieurs capteurs (14) configurés pour surveiller l'environnement (5) du navire (1) ;
obtenir des données de détection (16) provenant dudit ou desdits capteurs (14) identifiant au moins un élément détectable (22) d'une personne à la mer (20) dans ledit environnement (5) du navire (1) ;
générer une carte MOB (30) sur la base des données de détection (16), la carte MOB (30) affichant une ou plusieurs indications graphiques d'une position de la personne à la mer (20) par rapport à une position du navire (1) ;
estimer ladite position de la personne à la mer (20) au moins sur la base d'une dernière position connue dudit ou desdit éléments détectables (22) et d'une position actuelle du navire (1) ; et
mettre à jour la carte MOB (30) sur la base de l'estimation de la position de la personne à la mer (20).

2. Le système informatique (100 ; 500) selon la revendication 1, dans lequel les circuits de traitement (102 ; 502) sont en outre configurés pour :
identifier une ou plusieurs zones de recherche (34) dans la carte MOB (30) ;
marquer une zone de recherche (34) comme visitée en réponse au fait que le navire (1) a visité ladite zone de recherche (34) sur la base de sa position actuelle ; et
mettre à jour la carte MOB (30) sur la base de la zone de recherche marquée (34).

3. Le système informatique (100 ; 500) selon la revendication 2, dans lequel les circuits de traitement (102 ; 502) sont en outre configurés pour :
générer une trajectoire de recherche (40) pour le navire (1) sur la base de la ou des zones de recherche (34) et de la position de la personne à la mer (20) par rapport à la position de la navire (1) ; et
fournir une ou plusieurs instructions de navigation (42) sur la base de la trajectoire de recherche (40).

4. Le système informatique (100 ; 500) de l'une quelconque des revendications précédentes, dans lequel les circuits de traitement (102 ; 502) sont configurés pour effectuer automatiquement l'estimation de la position du MOB (20) en réponse à un échec d'obtention de données de détection (16) à partir d'un ou plusieurs capteurs (14).

5. Le système informatique (100 ; 500) de l'une quelconque des revendications précédentes, dans lequel les circuits de traitement (102 ; 502) sont en outre configurés pour :
obtenir des données environnementales de l'environnement (5) du navire (1) ; et
estimer ladite position du MOB (20) sur la base desdites données environnementales.

6. Le système informatique (100 ; 500) de la revendication 5, dans lequel les données environnementales obtenues comprennent un ou plusieurs éléments parmi vitesse du vent, direction du vent et écoulement du courant, et dans lequel les circuits de traitement(102 ; 502) sont configurés pour :
calculer un vecteur de dérive pour le MOB (20) sur la base dudit ou desdits éléments parmi vitesse du vent, direction du vent et écoulement du courant ; et
estimer la position du MOB (20) sur la base du vecteur de dérive.

7. Le système informatique (100 ; 500) de la revendication 6, dans lequel l'estimation de la position du MOB (20) est continue, et dans lequel les circuits de traitement (102 ; 502) sont configurés pour mettre à jour la position estimée du MOB (20) à des intervalles continus sur la base du déplacement du navire (1) et du vecteur de dérive calculé.

8. Le système informatique (100 ; 500) de l'une quelconque des revendications précédentes, dans lequel ladite au moins une caractéristique détectable (22) est un élément réfléchissant et les données de détection (16) sont des données de réflectivité.

9. Le système informatique (100 ; 500) de la revendication 8, dans lequel l'élément réfléchissant comprend des propriétés de réflectivité prédéterminées, les circuits de traitement (102 ; 502) étant configurés pour cartographier les données de réflectivité obtenues avec lesdites propriétés de réflectivité prédéterminées afin de valider l'identité de l'homme à la mer, MOB (20).

10. Le système informatique (100 ; 500) de l'une quelconque des revendications précédentes, dans lequel les circuits de traitement (102 ; 502) sont en outre configurés pour recevoir la demande de l'opérateur (10) d'activation du mode MOB (12) via un dispositif d'entrée (110).

11. Le système informatique (100 ; 500) de la revendication 10, dans lequel les circuits de traitement (102 ; 502) sont en outre configurés pour afficher la carte MOB (30) sur un dispositif d'affichage (112) du navire (1).

12. Un navire (1) comprenant le système informatique (100 ; 500) de l'une quelconque des revendications 1-11.

13. Un procédé mis en œuvre par ordinateur (200) pour gérer une situation d'homme à la mer, MOB, pour un navire (1), comprenant :
la réception (210), par des circuits de traitement (102 ; 502) d'un système informatique (100 ; 500), d'une demande de l'opérateur (10) d'activation d'un mode MOB (12) pour le navire (1) ;
en réponse à la réception de la demande de l'opérateur (10), l'activation (220), par les circuits de traitement (102 ; 502), du mode MOB (12) par la commande de l'activation d'un ou de plusieurs capteurs (14) configurés pour surveiller l'environnement (5) du navire (1) ;
l'obtention (230), par les circuits de traitement (102 ; 502), de données de détection (16) provenant dudit un ou plusieurs capteurs (14) identifiant au moins une caractéristique détectable (22) d'un homme à la mer, MOB (20), dans ledit environnement (5) du navire (1) ;
la génération (240), par les circuits de traitement (102 ; 502), d'une carte MOB (30) sur la base des données de détection (16), la carte MOB (30) affichant une ou plusieurs indications graphiques d'une position de l'homme à la mer, MOB (20), par rapport à une position du navire (1) ;
l'estimation (250), par les circuits de traitement (102 ; 502), de ladite position de l'homme à la mer, MOB (20) au moins sur la base d'une dernière position connue de ladite au moins une caractéristique détectable (22) et d'une position actuelle du navire (1) ; et
la mise à jour (260), par les circuits de traitement (102 ; 502), de la carte MOB (30) sur la base de l'estimation de la position de l'homme à la mer, MOB (20).

14. Un produit-programme informatique comprenant un code de programme destiné à exécuter, lorsqu'il est exécuté par les circuits de traitement (102 ; 502), le procédé (200) selon la revendication 13.

15. Un support de stockage non transitoire lisible par ordinateur comprenant des instructions qui, lorsqu'elles sont exécutées par les circuits de traitement (102 ; 502), amènent les circuits de traitement (102 ; 502) à mettre en œuvre le procédé (200) selon la revendication 13.
